# EUROPEAN PATENT SPECIFICATION

(11) **EP 4 487 935 B1**
(45) Date of publication and mention of the grant of the patent: **15.07.2026**
(21) Application number: 24214505.0
(22) Date of filing: 04.06.2021
(51) Int. Cl.: A47L 9/14, A47L 9/10, B01D 50/00, B01D 46/00, B01D 46/24, B01D 46/42, B01D 46/54, B01D 46/88

(54) **IMPROVED PRE-SEPARATOR ARRANGEMENTS FOR INDUSTRIAL DUST EXTRACTORS**
VERBESSERTE VORABSCHEIDERANORDNUNGEN FÜR INDUSTRIELLE STAUBABSCHEIDER
AGENCEMENTS DE PRÉ-SÉPARATEUR AMÉLIORÉS POUR ASPIRATEURS DE POUSSIÈRE INDUSTRIELS

(30) Priority: 11.06.2020 SE 2050697; 09.07.2020 SE 2050865; 09.07.2020 SE 2050866; 09.07.2020 SE 2050867; 26.08.2020 SE 2050985; 01.10.2020 SE 2051148
(43) Date of publication of application: 08.01.2025
(62) Divisional of application: 21822931.8
(73) Proprietor: Husqvarna AB, 561 82 Huskvarna (SE)
(72) Inventor: Elmestrand, Karl, Sävedalen (SE); Sjöberg, Axel, Västra Frölunda (SE)

(56) References cited:
- EP-B1- 2 721 985
- US-A- 3 034 273
- US-A- 3 961 921

## Description

### TECHNICAL FIELD

The present invention relates to dust extraction devices for use with construction equipment. There are disclosed hatches for dumping dust accumulated in a pre-separator such as a cyclone device into a dust container. There are also disclosed various dust containers for use together with the hatches.

### BACKGROUND

Dust and slurry are created by cutting, drilling, grinding and/or demolishing concrete, brick, and other hard construction materials. The dust and slurry may be collected by a dust extractor and removed from the construction site in a controlled manner. Dust extractors collect the dust and slurry by generating a vacuum by means of an impeller and motor arrangement, i.e., similar to a vacuum cleaner for domestic use. Many industrial grade dust extractors comprise a pre-separator or cyclone device followed by an essential filter such as a high-efficiency particulate air (HEPA) filter.

During operation, dust gradually accumulates inside the pre-separator chamber and needs to be emptied regularly into a dust container such as a disposable bag or other type of dust container. One example of a disposable dust container is the Longopac^{®} bagging system discussed, e.g., in US 2018/0192838.

A hatch mechanism separates the pre-separator chamber from the dust container. Several hatch mechanisms are known, such as hinged metal hatches, but such hatches have been known to damage and even puncture dust container bags and may not always be able to efficiently empty accumulated dust and slurry into the dust container. WO 2017/171596 discusses a type of hatch mechanism based on an aperture with a grid or net in combination with a hose device made of a flexible material. This hatch mechanism is less likely to damage dust container bags.

Rigid buckets may also be used to collect the dust and slurry from the dust extraction operation. It is of course desirable that the dust container is easily fitted to the dust extractor, and that both dust collection and disposal of collected dust and slurry is convenient for the operator to perform.

Some forms of dust, such as fine concrete dust, tends to clot and lump when accumulated at the bottom of the pre-separator. It may be difficult to efficiently empty such accumulated dust from the pre-separator. The design proposed in WO 2017/171596 may not always provide optimal emptying performance. Thus, there is a need for improved pre-separator hatch mechanisms for industrial grade dust extractors.

The pre-separator or cyclone normally comprises an air filter which gradually becomes particle-laden, i.e., clogged, during operation. This filter therefore needs to be cleaned regularly. It is known to clean the air filter in the pre-separator by means of a relief valve to generate a reverse thrust of air, or air pulse, as discussed in, e.g., WO 2017/171596, WO 2017/025305, and EP3619453. However, the design of a relief valve which generates this reverse thrust of air is not straight forward. There is a need for improved valve arrangements for generating such pulses of air which allow efficient filter cleaning in a convenient manner.

US3961921A describes a dust extractor of the type comprising a tank open at its upper end, where a blower assembly is mounted onto the tank to generate a vacuum in the tank. An air impervious liner bag with vent holes is arranged in the tank in order to simplify the emptying of dust and debris collected in the tank.

US3034273A describes a dust extractor which can be adapted to also extract liquids. This is achieved by means of a water impervious bag which is arranged inside a normal bag type dust strainer. A gap is formed between the water impervious bag and the strainer, allowing air but not liquid to escape the water impervious bag.

EP2721985B1 describes a dust container comprising an upper cover and a lower cover, where a dust bag is secured between an inner wall of the upper cover and the sidewall of the lower cover while covering an upper edge of the sidewall of the lower cover.

### SUMMARY

It is an object of the present invention to provide improved dust extraction devices. This object is obtained by a protective shroud according to claim 1.

Other aspects of the disclosure relate to hatch mechanisms which can be advantageously used together with the protective shroud according to claim 1.

According to aspects a hatch mechanism for a pre-separator or filter tank is provided. The mechanism comprises an aperture having a perimeter, and at least three elongated obturator elements pivotably attached along the perimeter at respective hinge ends. Each obturator element has a distal end arranged opposite to the hinge end along the extension direction of the obturator element. Adjacent obturator elements arranged along the perimeter are connected by foldable joining members arranged to guide the distal ends to a common intersection point. This common intersection point is distanced from a plane of the aperture, whereby the obturator elements are arranged to fold about respective hinge ends to a position of mutual support to close the hatch mechanism.

This hatch mechanism is lenient to a dust container bag, i.e., is not likely to puncture or otherwise damage a dust container bag. At the same time the hatch mechanism opens up to present a wide area aperture between the pre-separator main chamber where the dust accumulates and the dust container bag. This simplifies emptying dust and slurry from the pre-separator into the dust container. The hatch mechanism is, by the foldable jointing member, not a rigid structure, but will move slightly during dust extraction operation due to pressure differences over time on the pre-separator main chamber. This movement will prevent dust from forming into semi-solid lumps which are more difficult to empty into the dust container. The hatch mechanism is also applicable together with other dust extractor tanks.

According to aspects, the aperture has a circular or an elliptical shape, or a polygonal shape with number of equal sized faces equal to the number of obturator elements. These aperture geometries allow for presenting a large area aperture for emptying dust and slurry.

According to aspects, six obturator elements are arranged evenly spaced along the perimeter of the aperture. This geometry has been found particularly suitable for the present purpose of providing an efficient hatch mechanism which allows convenient emptying of dust and slurry into the dust container.

According to aspects, an obturator element comprises a rigid or semi-rigid batten structure. These battens can be integrally formed or otherwise attached to the foldable joining member structures, which is an advantage. The battens can be formed in a cost-effective manner from, e.g., metal, or plastic bars.

According to aspects, the obturator elements are pivotably attached via a resilient portion at the hinge end of each obturator element. This way a cost-efficient yet durable hinge function is provided. The resilient portion hinges are also non-rigid, thereby promoting motion of the hinge mechanism during use of the dust extractor as discussed above.

According to aspects, the foldable joining members are integrally formed as a tubular element in a resilient material, to which tubular element the obturator elements are attached. This tubular element can be manufactured in a cost-effective manner.

According to aspects, the perimeter comprises a rim portion with first and second flanges extending radially outwards from the rim portion with an axial separation. The first flange and the second flange are configured to mate with a flange portion on a dust container holder extending radially inwards to mate with the first and second flanges. This way a dust container holder can be fitted onto the hatch structure in a convenient and robust manner. This voids the need for separate holding structures for attaching the dust container holder, which is an advantage.

There is also disclosed herein a dust container holder suitable for mating with a hatch mechanism. The dust container holder comprises a tubular body extending between first and second end perimeters. A flange portion extends radially inwards in connection to the first end perimeter. A groove portion extends radially outwards in connection to the second end perimeter. This groove portion is configured to hold a dust container.

A dust container holder is a device arranged to hold a store of disposable or re-usable dust containers, such as a plastic bag dust container system like the Longopac^{®} bagging system discussed above. Dust containers are fitted in the dust container holder and the combination of dust containers and dust container holder can be mounted onto the hatch mechanism. This dust container holder can be releasably fitted onto the hatch mechanism in a convenient manner. A dust container bag system like the Longopac^{®} bagging system can be placed in the groove portion and the dust container holder fitted onto the hatch mechanism. When the dust container bag system is depleted, the dust container holder can be conveniently removed, and a new dust container bag system fitted into the groove portion.

The dust container holders discussed herein are particularly suitable for use together with the hatch mechanism. However, it is appreciated that the dust container holders may also be used with other forms of pre-separator designs. For instance, a pre-separator may lack the hatch mechanism discussed herein, but still comprise means arranged, e.g., on the pre-separator tank, for holding the flange portion of the dust container holder.

According to aspects, the dust container holder is arranged to be fitted onto the hatch mechanism by pushing the first end perimeter over the hatch mechanism. The flange portion is configured to hold the dust container in position between the flange portion and the hatch mechanism. Thus, there is no need for holding straps or the like, which is an advantage.

Other aspects of the invention relate to providing an improved pre-separator filter cleaning arrangement which alleviate at least some of the above-mentioned issues.

According to aspects a valve arrangement for generating a pulse of air to clean an air filter of a pre-separator is provided. The arrangement comprises a main valve closure body arranged to seal a passage between a high pressure side and a low pressure side of the valve arrangement, a control body connected to the main valve closure body, such that a position of the main valve closure body is determined by a position of the control body, a control chamber partially defined by the control body, whereby a volume of the control chamber is variable in relation to the position of the control body, and a control chamber valve having an open state and a closed state for regulating a pressure in the control chamber. The valve arrangement further comprises a resilient trigger membrane arranged between the high pressure side and the low pressure side such that a position of the resilient trigger membrane is dependent on a pressure difference between the high pressure side and the low pressure side, wherein the state of the control chamber valve is determined by the position of the resilient trigger membrane such that the control chamber valve is in the open state when the pressure difference is above a threshold and in the closed state otherwise.

This mechanism provides an automatically triggered air pulse for cleaning an air filter, thus avoiding the need for an operator to manually trigger filter cleaning. The mechanism is mechanical in nature, voiding the need for complicated control units and sensor arrangements, which is an advantage.

According to aspects, a lever is arranged pivotable about an axis and arranged to connect the resilient trigger membrane to the control chamber valve. This lever provides leverage which can be tuned to the force requirements of the application at hand, which is an advantage. The lever also distances the trigger membrane from the control chamber, thereby simplifying functional layout of the design an providing a valve arrangement with reduced footprint, which is an advantage.

According to aspects, the valve arrangement further comprises a calibration device configured to determine the threshold by biasing the lever to resist pivoting about the axis. This calibration device can be used in-field to adjust the automatic triggering function of the valve arrangement.

According to aspects, the lever is operable by a manual control device to force the control chamber valve into the open state. Thus, the automatic triggering function can be overridden in a convenient manner.

According to aspects, the control chamber valve and the resilient trigger membrane are integrally formed. This further reduces footprint and provides a compact design, which is an advantage.

There are also disclosed herein pre-separators and dust extractors associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method or process disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present invention will now be described in more detail with reference to the appended drawings, where
Figures 1A-B show an example dust extractor;
Figures 2A-C schematically illustrate a hatch mechanism;
Figure 3 schematically illustrates a hatch mechanism in closed position;
Figures 4A-C illustrate an example hatch mechanism in closed position;
Figures 5A-C illustrate an example hatch mechanism in open position;
Figure 6 illustrates an example dust container holder arrangement;
Figure 7A-B shows a dust container holder attached to a hatch mechanism;
Figure 8 schematically illustrates a dust container holder arrangement;
Figures 9A-B illustrates an example dust extractor lid portion;
Figures 10A-C show example valve arrangements for generating pulses of air;
Figure 10D schematically illustrates a principle of a triggering membrane;
Figures 11A-C conceptually illustrate the generation of an air pulse;
Figures 12A-C show an example dust container system;
Figures 13A-B show details of a dust container holder;
Figure 14 is an exploded view of a hatch mechanism with a support element;
Figure 15 shows details of a hatch mechanism with a support element;
Figures 16A-B illustrate an example protective shroud arrangement; and
Figure 17 shows views of an example protective shroud arrangement.

### DETAILED DESCRIPTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

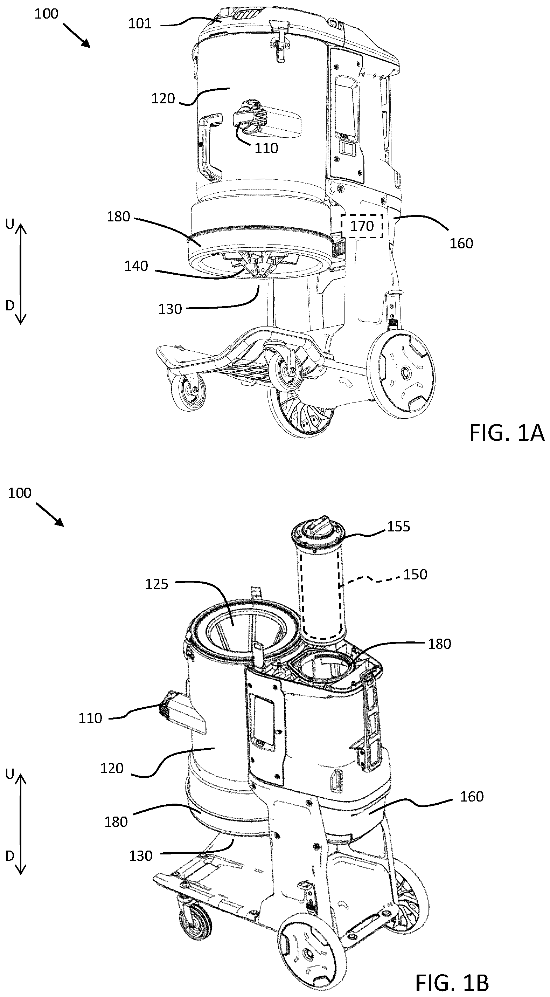

Figures 1A and 1B show an example dust extraction device 100. The dust extraction device can be connected via a hose to a dust generator (not shown in Figure 1), such as a core drill, a floor grinder, a concrete saw, or the like. The dust and slurry from the dust generator enters the dust extractor via an inlet 110. A pre-separator 120 is arranged after the inlet, i.e., downstream with respect to the airflow direction into the inlet 110. The pre-separator may comprise a cyclone with a pre-filter for separating out larger debris particles from the particle-laden airflow entering the inlet 110. The larger debris particles may be collected via an outlet 130 of the pre-separator 120. A hatch mechanism 140 is arranged to close the outlet 130 during operation. Figure 1A also shows a dust extractor lid 101 which forms an upper portion of the dust extractor 100. The lid 101 is not shown in Figure 1B.

Generally, herein, an upwards direction on the dust extractor is indicated by arrow U, and a downwards direction opposite to the upwards direction is indicated by arrow D. The upwards direction points away from the ground support part of the dust extractor, i.e., away from the ground when the dust extractor is in use.

The dust extractor 100 may of course also be used together with a regular vacuum cleaner nozzle.

The dust extractor 100 may be powered from electrical mains via cable, or by one or more batteries.

The pre-separator 120 may also be referred to as a cyclone, a cyclone tank, or a filter tank. As noted above, the hatch mechanisms discussed herein are applicable with most dust extractors for industrial use and need not be arranged to seal a pre-separator. Rather, the hatch mechanisms can be used to seal any filter tank structure.

The air flow continues from the pre-separator 120 via one or more conduits in the lid 101 into one or more essential filters 150, here shown inside a filter holder 155. An essential filter is a filter designed to meet strict requirements on filtering function. Such an essential filter 150 may, e.g., be a High-Efficiency Particulate Air (HEPA) filter, but other air filters may also be used.

A blower arrangement 160 is arranged downstream from the pre-separator 120 and from the one or more essential filters 150. The blower arrangement generates a suction force or vacuum which draws the particle-laden airflow in through the inlet 110, past the pre-separator 120, and through the one or more essential filters 150. Herein, a vacuum or vacuum level indicates how far below a reference pressure level, such as atmospheric pressure, the pressure in the airflow is.

The dust extractor 100 may also comprise a control unit 170 configured to perform various control actions, such as monitoring pressure levels at various places in the dust extractor 100 and controlling the blower arrangement 160.

The hatch mechanism 140 is an important part of the dust extractor 100. This hatch is used when emptying the pre-separator chamber into a dust container which is arranged below the hatch (but not shown in Figures 1A-B). The dust container may, e.g., be a removable box structure, a bucket, or a plastic bag, such as the Longopac^{®} bagging system mentioned above. If the hatch mechanism is used with a non-rigid plastic bag dust container system, it is important that the dust bag is not sucked into the pre-separator chamber via the hatch. However, this does not mean that the hatch needs to be air-tight during operation.

The present invention is advantageously combined with hatch mechanisms which close to prevent the dust container from being sucked into the pre-separator during operation, while at the same time allowing for easy emptying of dust into the dust container. The hatch mechanisms are designed so as to not damage a plastic bag dust container.

Aspects of the present invention can be combined with hatch mechanisms that comprise a universal attachment interface for attaching various types of dust containers. Thus, the same type of attachment mechanism is used regardless of whether a single plastic bag, a bagging system like the Longopac system, or a rigid bucket is used. This way an operator can choose an appropriate dust container for the task at hand, without modifying the dust extractor, or the hatch mechanism.

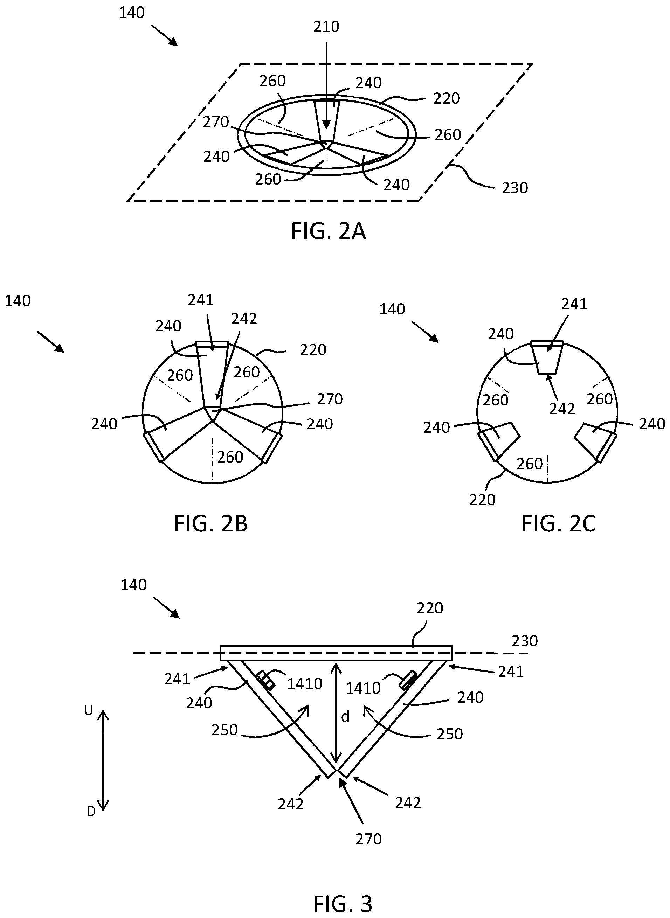

Figures 2A-C schematically illustrate a hatch mechanism which can be combined with the present invention. The hatch mechanisms 140 discussed herein are generally suitable for use with pre-separators 120, such as the pre-separator exemplified in Figures 1A and 1B.

The mechanism comprises an aperture 210 having a perimeter 220 arranged in a plane 230. It is via this aperture that the accumulated dust and slurry is dumped into the dust container below the hatch mechanism. To empty the pre-separator chamber, the low operating pressure inside the chamber is first increased, e.g., by opening a conduit to outside atmosphere as during filter cleaning, or by turning off the blower arrangement 160. The plane 230 can be defined freely to be some plane having the main emptying direction of the hatch as its normal. It is appreciated that the perimeter need not be perfectly aligned with the plane along the entire circumference.

At least three elongated obturator elements 240 are pivotably attached 250 along the perimeter 220 at respective hinge ends 241. Each obturator element comprises a distal end 242 arranged opposite to the hinge end along the extension direction of the obturator element 240. This means that each obturator element is connected to the perimeter 220 in a way such that it can swing inwards with respect to the aperture.

Figure 3 shows an example hatch mechanism 140 in closed position where the pivoting motion 250 by the obturator elements 240 has been indicated. Adjacent obturator elements 240 arranged along the perimeter 220 are connected by foldable joining members 260 arranged to guide the distal ends 242 to a common intersection point 270 distanced d from the plane 230, whereby the obturator elements 240 are arranged to fold about respective hinge ends 241 to a position of mutual support to close the hatch mechanism 140. Thus, the obturator elements swing inwards to a position of mutual support, forming an upside-down cone- or pyramid-like structure where the distal ends meet at the pointy end. An obturator element 240 may, e.g., be realized by a rigid or semi-rigid batten structure, such as a metal bar structure or an elongated plastic structure.

When this structure is subject to a pressure gradient over the aperture, the obturator elements 240 and foldable joining members 260 will be sucked towards the pre-separator chamber, i.e., in direction of the aperture 210. This will cause the obturator elements 240 to pivot as illustrated in Figure 3 which closes the hatch, at least sufficiently in order for a dust container bag to not get sucked into the pre-separator chamber. When the low pressure in the pre-separator chamber is released, the obturator elements 240 will no longer be held in closed position, but will swing radially outwards, thereby opening the hatch. According to some aspects the obturator elements 240 are configured with an increased weight in order to promote opening of the hatch by gravitational force.

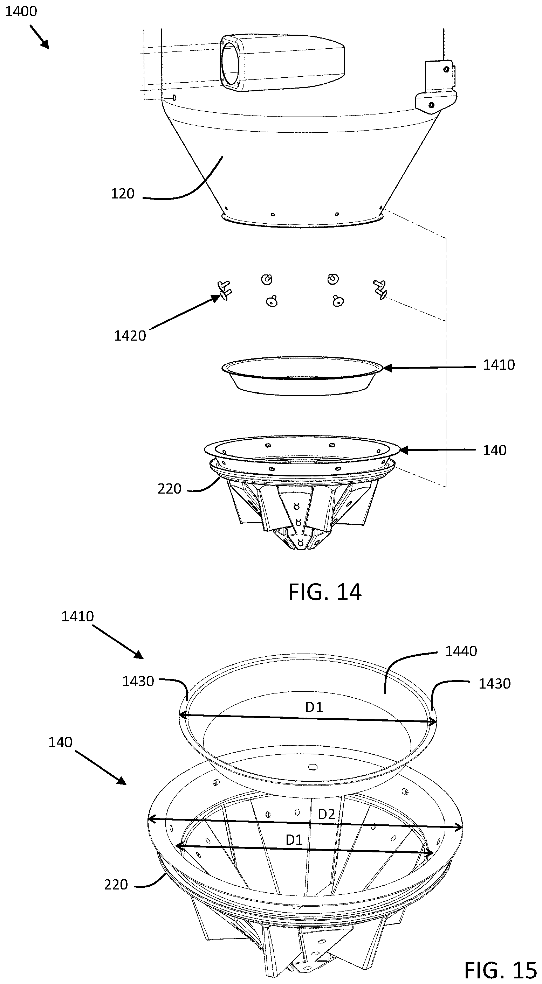

In some cases, an optional annular structural support member 1410 may be used to provide a stop such that the obturator elements 240 cannot pivot past the position of mutual support. This annular structural support member will be discussed in more detail below in connection to Figure 14.

The hatch mechanisms proposed herein are not rigid like other known hatch mechanism based on metal lids and the like. Rather, the hatch can be integrally formed in a resilient material which moves and/or vibrates during operation, such as during smaller pressure differences over time in the pre-separator main chamber. This motion by the hatch mechanism prevents dust and slurry from forming more solid lumps which are difficult to empty. Also, the hatch mechanism may even allow dust and slurry to penetrate the hatch mechanism despite a pressure gradient over the aperture when the accumulated dust obtains sufficient weight to overcome the suction force which closes the hatch. This means that the hatch mechanisms disclosed herein may automatically open as needed to dump dust and slurry into the dust container below the hatch. This automatic opening may, e.g., take place when the air filter 125 is cleaned by a reverse thrust of air.

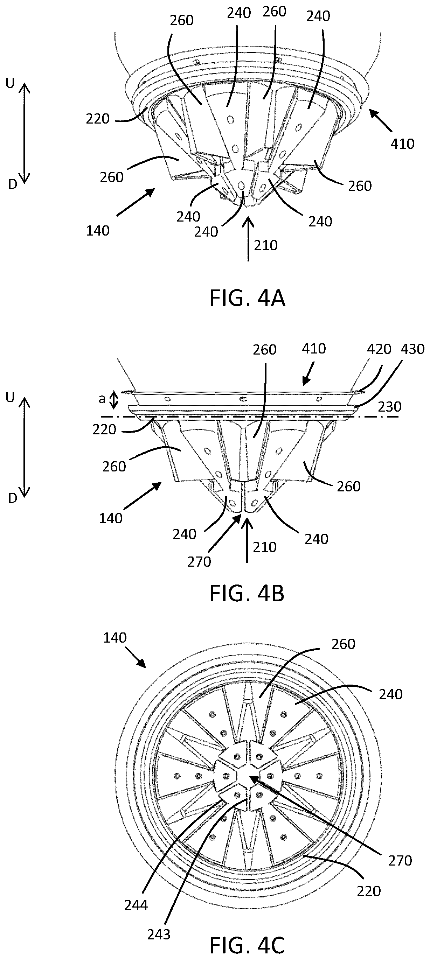

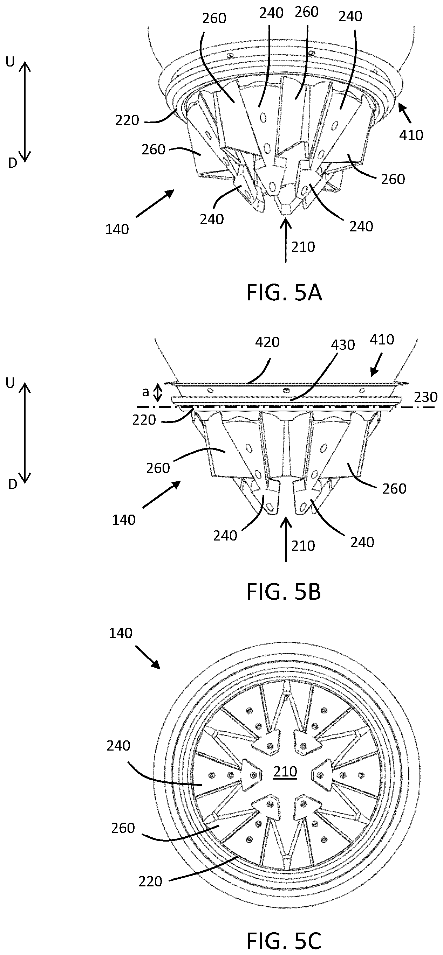

Figures 4A-C illustrate an example hatch mechanism in closed position. Figures 5A-C illustrate the same example hatch mechanism in open position.

In this example the aperture 210 has a circular shape and the common intersection point 270 is located at the center of the aperture. However, other shapes are also possible. For instance, an elliptical aperture shape could be used, where the obturator members 240 are of different length in order to fold about the respective hinge ends 241 to a position of mutual support to close the hatch mechanism 140.

According to some other aspects, the aperture 210 has a polygonal shape with number of equal sized faces equal to the number of obturator elements 240.

The common intersection point 270 can be located anywhere in the aperture, e.g., offset to one side, as long as the common intersection point 270 is distanced d from the plane 230. The obturator elements 240 are then matched to meet at the common intersection point when pivoting about the hinge ends 241.

In the example shown in Figures 4A-C and 5A-C, six obturator elements 240 are arranged evenly spaced along the perimeter 220 of the aperture 210. The obturator elements 240 are pivotably attached via a resilient portion at the hinge end 241 of each obturator element 240, i.e., a rubber or soft plastic part separating the obturator member from the perimeter to allow pivoting by the obturator member. Each obturator element is configured with a distal end 242 with a polygon shape matched to adjacent obturator elements. In this case the polygon shape has two opposing tangential sides 243 arranged at an acute angle of about 60 degrees in order to interface with adjacent obturator elements, and two radial sides 244 as indicated in Figure 4C.

According to another example, the obturator elements 240 are pivotably attached via a hinge at the hinge end 241 of each obturator element 240. This hinge may, e.g., be a piano hinge or the like.

The foldable joining members 260 are preferably but not necessarily made of a flexible sheet material. As an alternative to using a flexible sheet material like rubber, hinges can also be used to allow folding. The important feature here is that the folding members guide to obturator elements to the position of mutual support during pivoting about the respective hinge ends.

In the example shown in Figures 4A-Cand 5A-C, the foldable joining members 260 are arranged with a folding indication configured extending along a line from a point on the perimeter halfway between the adjacent obturator elements towards a geometric center of the aperture 210. Preferably, the foldable joining members 260 are integrally formed as a tubular element in a resilient material, such as rubber, i.e., a flexible structure resembling a hose or other resilient cylindrical structure, to which tubular element the obturator elements 240 are attached. The obturator elements 240 can also be molded into or otherwise integrally formed with the tubular structure. It may as mentioned above be advantageous to arrange the obturator elements with a relatively large weight, where the weight is configured in dependence of the power of the dust extractor, in order to promote opening of the hatch mechanism during emptying of dust and slurry into the dust container.

Figure 14 and Figure 15 illustrate an optional annular structural support member 1410 arranged in connection to the perimeter 220 of the hatch mechanism 140, on the side facing the pre-separator 120. The annular structural support member extends transversally to the elongated obturator elements 240 and prevents pivoting by the elongated obturator elements 240 beyond the position of mutual support, as shown in Figure 3. Thus, as the obturator elements are exposed to suction force by the dust extractor which biases the obturator elements towards the position of mutual support, the annular structural support member acts as a stop which prevents the obturator elements from pivoting too far in the radial direction past the position of mutual support.

The annular structural support member 1410 is arranged to be at least partially enclosed by the hatch mechanism, i.e., to have a position radially interior to the hatch mechanism, as shown in Figure 15. The diameter D1 of the rim portion 1430 is therefore smaller than the largest diameter D2 of the hatch mechanism 140 and smaller than at least one other diameter of the hatch mechanism. The diameter D1 of the rim portion 1430 may, e.g., be configured to match the internal diameter of the hatch mechanism at a supporting position.

The annular structural support member 1410 needs to be rigid enough so as to be able to hold an obturator element from pivoting too far past the position of mutual support. It may, e.g., be formed in a rigid sheet metal material or in a rigid plastic material. The annular member is preferably configured with a frustoconical shape 1440 matched to the shape of the elongated obturator elements 240 at the respective hinge ends 241, as shown in Figure 15.

The annular structural support member 1410 can be held in position in-between the pre-separator 120 and the hatch mechanism 140. For instance, a radially protruding rim portion 1430 can be arranged on the support member. In this case the annular structural support member 1410 is arranged to be supported on the hatch mechanism by the radially protruding rim portion 1430, i.e., the support member is at least in part suspended on the rim portion resting on the hatch mechanism interior.

A groove may be formed in a resilient interior portion of the hatch mechanism, which groove matches the rim portion 1430. The rim portion may enter into the groove, and consequently be held in position relative to the hatch mechanism.

The hatch mechanism 140 may, according to some aspects, be attached to the pre-separator 120 by a plurality of rivets 1420, as illustrated in Figure 14. Of course, other fastening means may also be used, such as bolts or an adhesive. A rim and matching groove arrangement can also be used, with the advantage that the hatch mechanism becomes more easily detached from the pre-separator 120and thus more easily serviceable.

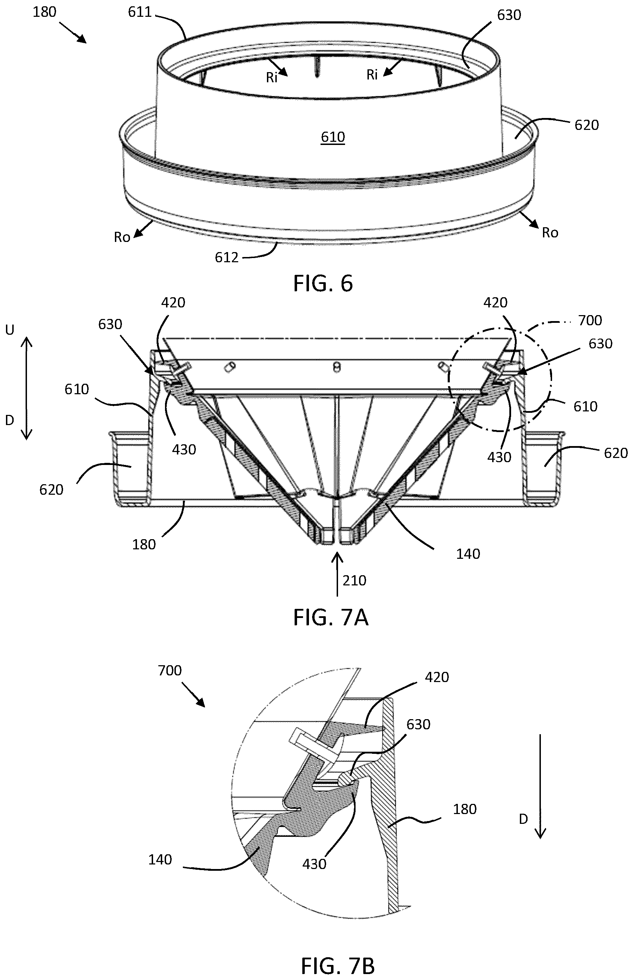

With reference again to Figures 1A and 1B, some dust extractors 100 comprise dust container holder arrangements 180. Figure 6 illustrates an example of such a dust container holder arrangement 180. Some of the hatch mechanisms 140 disclosed herein are configured to hold a dust container arrangement. According to such aspects, with reference to, e.g., Figure 4B and 5B, the perimeter 220 of the hatch mechanism 140 comprises a rim portion 410 with first 420 and second 430 flanges extending radially outwards from the rim portion with an axial separation a.

With reference also to Figure 7A and Figure 7B, the first flange 420 and the second flange 430 of the hatch mechanism 140 are configured to mate with a flange portion 630 on the dust container holder 180 which extends radially inwards Ri to mate with the first and second flanges on the hatch mechanism. Figures 7A-B show a dust container holder 180 attached to a hatch mechanism 140 by these radial flanges.

To mount the dust container holder 180 onto the dust extractor, an operator simply pushes the dust container holder 180 onto the hatch mechanism 140, in an upwards direction U opposite to the downwards direction indicated by arrow D in Figure 7A and 7B. The flange portion 630 then traverses past the second flange 430 of the hatch mechanism 140 and then catches onto the first flange portion 420 on the hatch mechanism 140. The dust container holder is then held in position, since the flange portion 630 is supported in-between the first and second flange portions 420, 430 of the hatch mechanism, as shown in Figure 7B.

To remove the dust container holder 180, the operator pulls the dust container holder 180 in the downwards direction D with enough force such that the flange portion 630 overcomes the supporting force exerted by the second flange portion 430. Thus, the dust container holder is releasably held in position by the first and second flange portions 420, 430 of the hatch mechanism in cooperation with the flange portion 630 of the dust container holder.

It is appreciated that one or both of the dust container flange portion 630 and the second flange portion 430 of the hatch mechanism may be formed in a resilient material to allow the dust container holder 180 to traverse onto the hatch mechanism 140. One of the dust container flange portion 630 and the second flange portion 430, but not both, may be formed in a rigid material, such as plastic or metal.

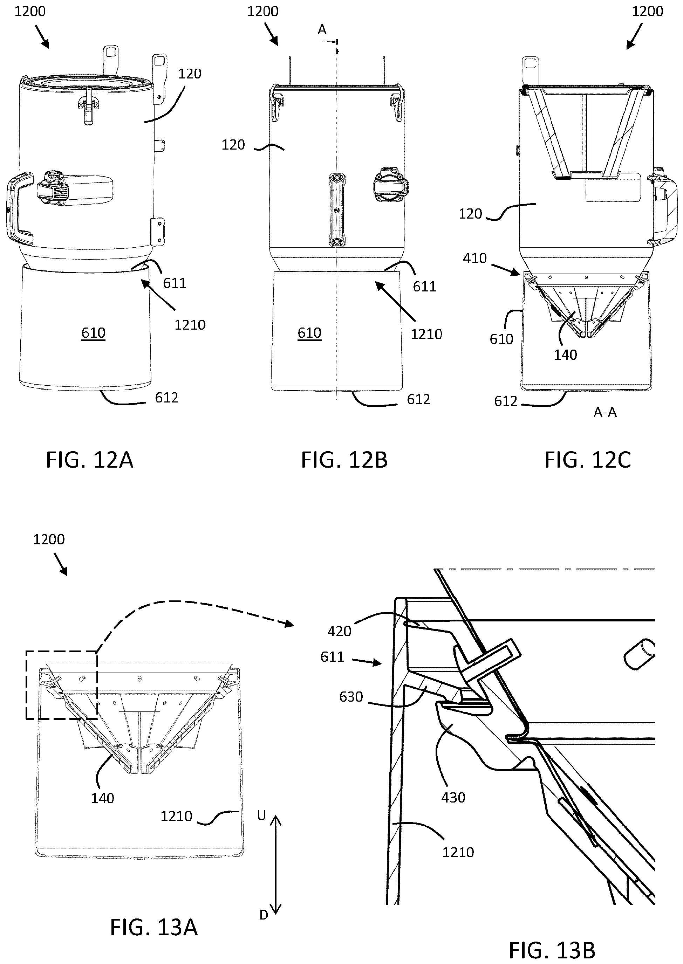

An advantage with the attachment arrangement comprising the system of cooperating flanges 420, 430, 630, is that other types of dust container holders can also be attached to the same hatch mechanism, thus allowing an operator to select which type of dust container to use for a given dust extraction task. A holder configured to hold a single-use industrial plastic bag may, e.g., be configured with the flange portion 630. A rigid bucket will be discussed below in connection to Figures 12A-C and Figures 13A-B.

The dust container holder 180 in Figure 6 comprises a tubular body 610 extending between first 611 and second 612 end perimeters. The flange portion 630 extends radially inwards Ri in connection to the first end perimeter 611. A groove portion 620 extends radially outwards Ro in connection to the second end perimeter. This groove portion 620 is configured to hold a dust container 810, such as the Longopac^{®} bagging system.

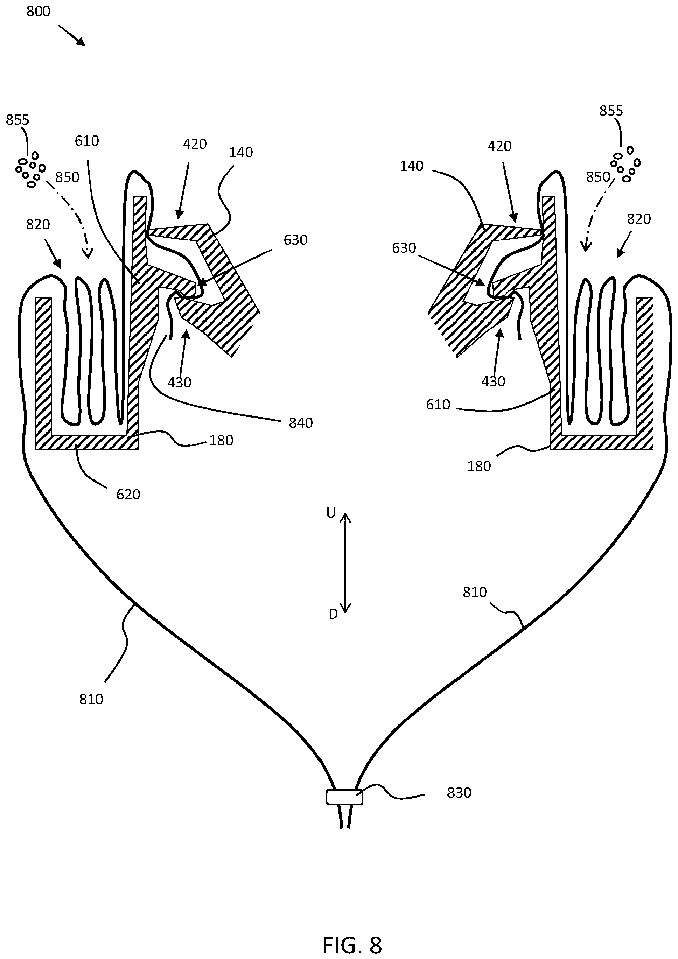

Figure 8 schematically illustrates a dust container assembly 800 comprising a dust container holder arrangement according to the present teaching fitted onto a hatch mechanism. Note how the dust container 810 is crimped 820 (like the bellows of an accordion) and fitted into the groove portion 620, with an end section 840 that is squeezed between the first flange 420 and the second flange 430 of the hatch mechanism 140, and the flange 630 of the dust container holder 180. The dust container is sealed by a sealing member 830, such as a zip-tie, cable-tie, a piece of string, or the like.

It is appreciated that a normal industrial-grade plastic bag may also be fitted to the dust container holder 180 in this manner, i.e., the dust container holder 180 may be used with other dust container systems, not only with a Longopac bagging system.

The dust container holder 180 is arranged to be fitted onto the hatch mechanism 140 by pushing the first end perimeter 611 over the hatch mechanism, wherein the flange portion 630 is configured to hold the dust container 810 in position between the flange portion and the hatch mechanism 140. This way the dust container can be easily fitted onto the dust extractor. The dust container is releasably held in position between the flanges, which voids the need for additional fastening means to hold the dust container in position.

Figures 12A-C and Figures 13A-B. illustrate an alternative dust container arrangement 1200. Here, the dust container is instead a bucket which is arranged to receive the dust and slurry output via the hatch mechanism 140. The bucket may then be emptied and replaced to receive more dust and slurry. The interface between the hatch mechanism 140 and the bucket is the same as that discussed above in connection to, e.g., Figure 7A and Figure 7B, which means that an operator can choose between different dust container options without further modifications to the dust extractor. Some dust extraction tasks may be more suitably carried out with a Longopac bagging system, while some other dust extraction tasks are more suitably executed using a bucket as dust container. The dust extractor 100 may be sold together with a kit of parts comprising a first dust container holder configured to hold, e.g., a Longopac bagging system, and a second dust container holder configured to hold a bucket. In other words, the second end perimeter 612 of this dust container is a plane which seals the dust container.

Figures 12A-C and Figures 13A-B. show a dust container holder 1210 for mating with a hatch mechanism 140. The dust container holder again comprises a tubular body 610 extending from a first 611 end perimeter, wherein a flange portion 630, showed in Figure 13B, extends radially inwards Ri in connection to the first end perimeter 611, wherein the dust container holder 1210 is closed at an end opposite to the first end perimeter 611 to form a bucket. The bucket part of the dust container holder 1210 may be integrated with the dust container holder as shown in Figures 12A-C. Alternatively, the bucket part may be releasably attached to the dust container holder 1210 by, e.g., bayonet attachment, or a threaded portion.

The dust container holder 1210 is arranged to be fitted onto the hatch mechanism 140 by pushing the first end perimeter 611 over the hatch mechanism. The flange portion 630 is configured to hold the dust container 810 in position by entering in-between the first 420 and second 430 flange portions of the hatch mechanism 140, as shown in Figure 13B.

Thus, advantageously, an operator may freely choose between a plurality of dust container options. Some dust extraction tasks may be better performed with a single durable plastic bag mounted onto a dust container holder like that shown in Figure 7A and 7B. Other dust extraction tasks may be more conveniently performed by mounting a Longopac Bagging system to the dust container holder. Finally, a bucket may also be used with the same dust container holding arrangement. An operator is provided with several dust container options, and is free to mount whichever dust container that is preferred using the same mechanical attachment interface, i.e., the flange portion 630, which extends radially inwards Ri in connection to the first end perimeter 611, which is the same flange portion that was discussed above in connection to Figures 7A-B.

The dust container holders discussed herein are particularly suitable for use together with a hatch mechanism like that illustrated in, e.g., Figure 7A. However, it is appreciated that the dust container holders may also be used with other forms of pre-separator designs. For instance, a pre-separator may lack the hatch mechanism discussed herein, but still comprise means arranged, e.g., on the pre-separator tank, for holding the flange portion of the dust container holder. For instance, the first and second flanges 420, 430 may be assembled directly onto a pre-separator tank, whereupon the dust container holder can be used independently from the type of pre-separator design. The dust container holders may then be used with a simple grating closure, or some other form of closing lid mechanism.

During some dust extraction operating scenarios, dust and slurry 855 may find its way into the creases of the dust container bagging system when received in the groove portion 620, as indicated in Figure 8 by the dash-dotted line 850. This dust and slurry may cause inconvenience to an operator, and may also damage the dust container, which is of course undesired.

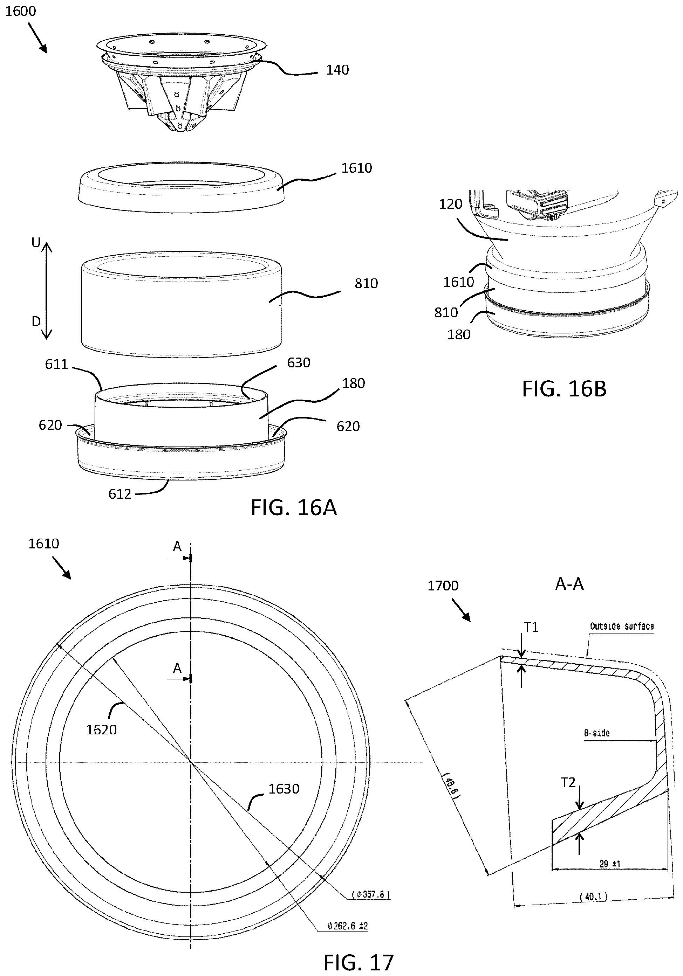

Figures 16 and 17 shows an optional protective shroud 1610 arranged to at least partly cover the dust container 810 when received in the groove portion 620, as shown in Figure 16B, where the dust container is only schematically illustrated. The protective shroud 1610 may be formed in a resilient material allowing the protective shroud to be folded over a dust container 810 received in the groove portion 620. Thus, an operator may insert a dust container such as the Longopac^{®} bagging system discussed above into the groove portion 620, and then fold the protective shroud 1610 over the dust container, thereby shielding the dust container from dust and slurry. The protective shroud 1610 may be configured with an outer diameter 1620 larger than an outer diameter of the dust container 810, and with an inner diameter 1630 smaller than an inner diameter of the dust container 810, as shown in Figure 17.

It is noted that neither of the dust container holder nor the protective shroud depends on the features of the hatch mechanism. Rather, both the dust container holders discussed herein as well as the protective shroud may also be used on a dust extractor which does not comprise the hatch mechanisms. For instance, a pre-separator tank may be designed with a separate arrangement comprising flanges like the first flange portion 420 and the second flange portion 430, to receive and to hold the dust container holder in position during use.

The protective shroud 1610 may be arranged to extend over the top section of the dust container 810 as illustrated in Figure 16B. However, the protective shroud 1610 may also be configured to extend downwards in direction D to shield the entire dust container.

The protective shroud 1610 may optionally be formed in a disposable material, and may then be disposed once, e.g., the Longopac^{®} bagging system is replaced by a new system. The protective shroud may in such cases be sold together with the dust container system. The protective shroud 1610 may also be formed in rubber or a pliable plastic material and can in such cases be integrated with the hatch mechanism 140, or fixedly attached to the dust extractor.

To summarize, there is disclosed herein a protective shroud 1610 arranged to at least partly cover a dust container 810 received in a groove portion 620 of a dust container holder 180. The protective shroud 1610 is formed in a resilient material allowing the protective shroud to be folded over the dust container 810 when received in the groove portion 620.

According to some aspects, the protective shroud 1610 is formed in rubber or a pliable plastic material and may also be configured as a disposable unit which is discarded together with the bagging system. A new protective shroud may then be supplied together with the bagging system or sold separately.

The protective shroud 1610 may generally be arranged to envelope a pre-separator 120 of a dust extractor 100 at an end opposite to a dust extractor lid 101, and to be elastically held in position relative to the pre-separator 120. The protective shroud may be held in position by traction from its elasticity, or by other means.

As illustrated in Figure 17, the protective shroud 1610 may be configured with an annular shape, and with a U-shaped cross-section 1700. Notably, a material thickness T1 on an outer portion of the protective shroud is smaller than a material thickness T2 on an inner portion of the protective shroud. I.e., the material thickness of the protective shroud 1610 is decreasing with radial distance from the center of the annular member. This makes it easier to fold the protective shroud 1610 over the dust container, since this folding primarily involves the small thickness portion, and the protective shroud 1610 is firmly held in position by tractive force due to its elasticity and increased material thickness T2.

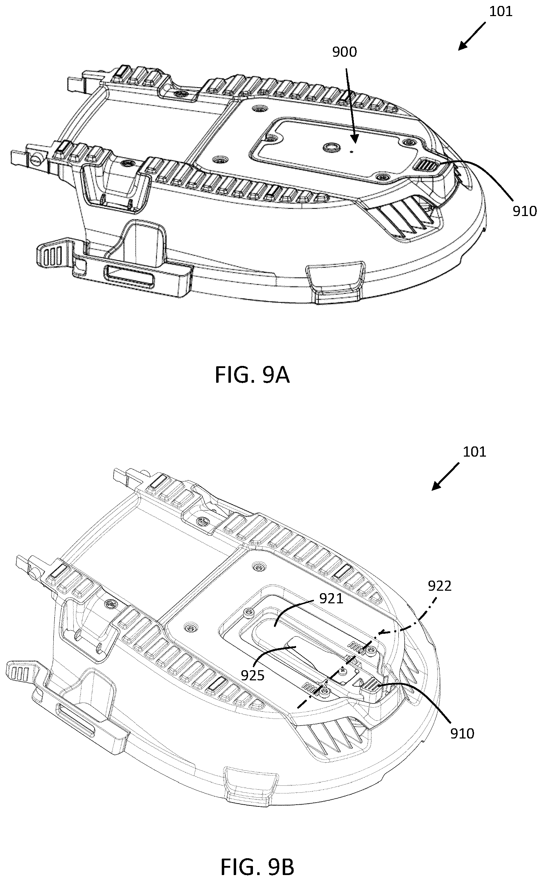

Figures 9A illustrates an example dust extractor lid portion 101. This lid portion 101 comprises an example valve arrangement 900 for generating pulses of air to clean an air filter in the pre-separator 120. It is appreciated that the principles of the valve arrangements discussed herein are applicable in a wide variety of applications, and not limited to mounting in the exact manner illustrated by the drawings.

The valve arrangements 900 discussed herein are configured for automatically generating an air pulse to clean the pre-separator air filter when needed, i.e., when the air filter is starting to become too particle laden for efficient dust extraction operation.

Some of the valve arrangements are also possible to operate manually, overriding the automatic function. Towards this end, a manual control device 910, such as a button or a knob, is arranged on the lid 101.

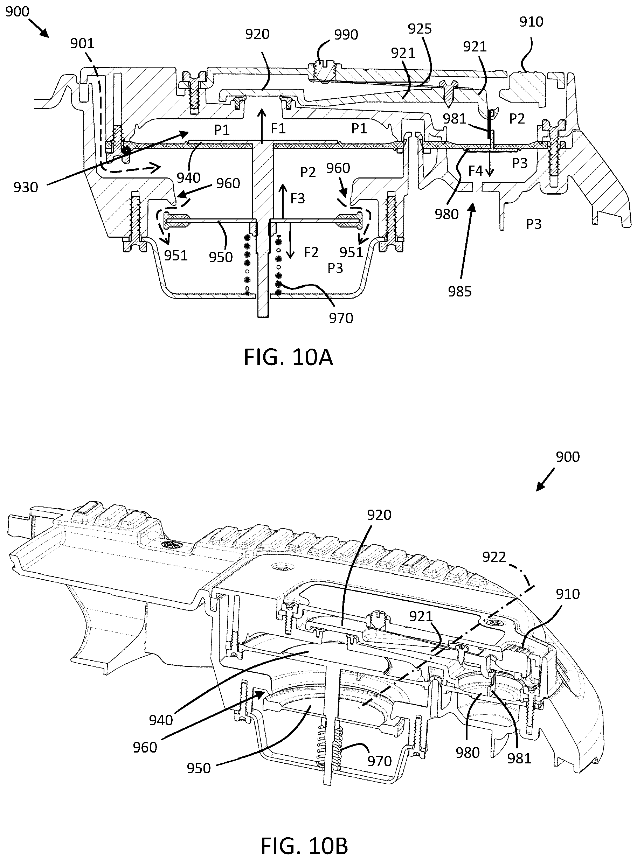

Figure 9B illustrates details of the valve arrangement 900 which will be discussed in more detail below. Figures 10A-C show example valve arrangements 900 for generating a pulse of air to clean an air filter 125 of a pre-separator 120. The arrangement 900 comprises a main valve closure body 950 arranged to seal a passage 951 between a high pressure P2 side and a low pressure P3 side of the valve arrangement 900. The high pressure side may, e.g., be connected via fluid conduit 901 to atmospheric pressure, while the low pressure side may be associated with a machine operating pressure, i.e., be connected to a point in the dust extraction flow upstream from the air filter 125.

The valve arrangement 900 also comprises a control body 940 connected to the main valve closure body 950, such that a position of the main valve closure body 950 is determined by a position of the control body 940. In other words, if the control body 940 moves, so does the main valve closure body 950. Note that this motion is longitudinal or normal with respect to a plane of the main valve closure body 950 in Figure 10A, but this exact configuration is not a necessary feature. The position of the main valve closure body 950 can be determined by the position of the control body 940 is many different ways, e.g., via a lever arrangement, via wire, or by some other form of mechanical linkage.

The control chamber 930 is partially defined by the control body 940. In the example of Figures 10A-B, the control chamber is a space which is sealed by a resilient membrane which is able to move up and down to restrict or expand the volume of the control chamber. The volume of the control chamber 930 is therefore variable in relation to the position of the control body 940. Other ways to implement this type of control chamber would, e.g., comprise a cylinder and piston arrangement, or a balloon arrangement. If pressure P1 inside the control chamber 930 is smaller than pressure P2 outside the control chamber, the control body 940 will move due to force F1 to restrict the volume in the control chamber 930. This motion also pulls the main valve control body 950 into sealing position. Another force F2 acts on the main valve control body 950 due to a pressure difference between the low pressure P3 side and the high pressure P2 side.

A control chamber valve 920 having an open state and a closed state for regulating the pressure P1 in the control chamber is furthermore comprised in the valve arrangement 900. When this valve is opened to increase pressure in the control chamber, e.g., from a machine operating pressure to atmospheric pressure, the main valve control body is shifted into a non-sealing position. The effective area of the control body 940 may be arranged larger than an effective area of the main valve control body 950.

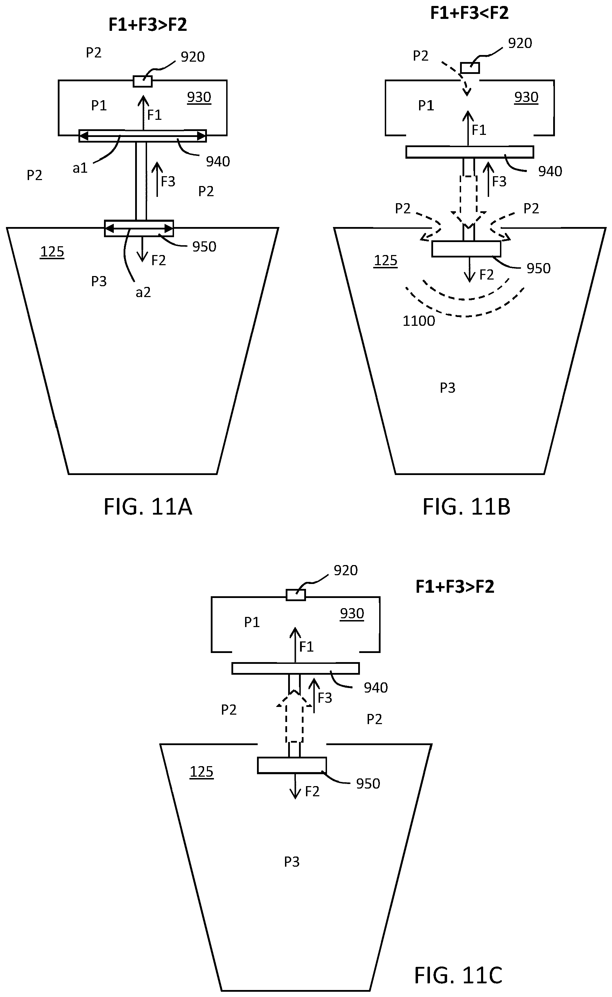

This general type of control chamber mechanism for opening and closing a main valve closure body 950 has been proposed previously, see, e.g., WO 2017/025305 and EP3619453 A1. Its basic mechanisms and principles of operation will therefore not be discussed in more detail herein, although an example will be discussed in connection to Figures 11A-C below.

Differently from the known valve arrangements, this valve arrangement may be automatically triggered when the air filter becomes particle laden and is in need of cleaning, or when the operator blocks the inlet 110. Towards this end, the valve arrangement 900 comprises a resilient trigger membrane 980 arranged between the high pressure P2 side and the low pressure P3 side such that a position of the resilient trigger membrane 980 is dependent on a pressure difference between the high pressure P2 side and the low pressure P3 side. The state of the control chamber valve 920 in the valve arrangement 900 is arranged to be determined by the position of the resilient trigger membrane 980 such that the control chamber valve 920 is in the open state when the pressure difference is above a threshold and in the closed state otherwise.

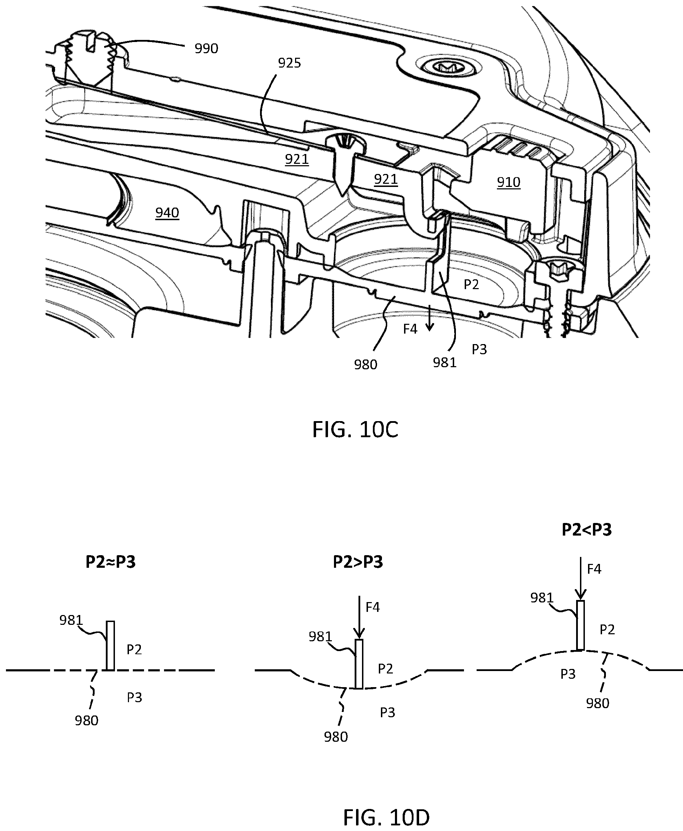

Since the membrane is resilient, it will flex and be drawn towards the side of the membrane with lowest pressure, as illustrated in Figure 10D. Thus, a connecting member 981 attached to the membrane will move in dependence of the pressure difference on either side of the membrane 980.

Some optional details of the valve arrangement 900 are illustrated in 10C. Here, with reference also to Figure 10B, a lever 921 is arranged pivotable about an axis 922 and arranged to connect the resilient trigger membrane 980 to the control chamber valve 920. Thus, as the pressure difference P2-P3 increases, the resilient trigger membrane 980 is drawn towards the low-pressure side (pressure P3, downwards in Figure 10C). This motion by the resilient trigger membrane 980 pulls the lever downwards via the connecting member 981. The downward pulling force F4, when strong enough, translates into a pivoting motion by the lever 921, causing the control chamber valve 920 to open abruptly.

An optional biasing member 925, here a leaf spring, is configured to resist this pivoting motion. This biasing member is part of an optional calibration device 925, 990. Thus, according to some aspects, the valve arrangement 900 further comprises a calibration device 925, 990 configured to determine the threshold by biasing the lever to resist pivoting about the axis 922. This calibration device may, e.g., be a resilient member like the leaf spring shown in Figures 10A and 10C with a tuning screw 990 to determine the biasing force. A helical spring or other resilient member can of course also be used for the same biasing effect.

The lever 921 is optionally arranged to be operable by a manual control device 910 to force the control chamber valve 920 into the open state. This manual control device 910 is exemplified by a push-button directly actuating the lever 921 in Figure 10C. This manual control device then overrides the automatic triggering function to generate the pulse of air independently of the pressure difference P2-P3.

According to other aspects, the control chamber valve 920 and the resilient trigger membrane 980 are integrally formed. This means that the resilient trigger membrane 980 directly pulls the control chamber valve 920 into the open state as the pressure difference goes above the threshold, perhaps first overcoming a biasing force exerted by a resilient member configured to bias the control chamber valve 920 into the closed position.

With reference to Figure 10B, the valve arrangement 900 optionally comprises a main valve biasing member 970 arranged to bias the main valve closure body 950 into sealing the passage 951. This main valve biasing member can be realized by a helical spring as shown in Figure 10B.

Figures 11A-C conceptually illustrate the generation of an air pulse by the valve arrangements disclosed herein. Figure 11A illustrates an operation state where the control chamber valve 920 is in closed position, and a low pressure prevails in the control chamber. This low pressure in the control chamber may be obtained, e.g., by connecting the control chamber to the low-pressure side of the dust extractor 100. The main valve closure body 950 is in sealing position due to that the combination of force F1 generated by the control body 940 and the optional biasing force F3 generated, e.g., by the resilient element 970 overcomes the force F2 exerted on the main valve closure body 950 by the pressure difference between the high pressure P2 (normally atmospheric pressure) and the pressure P3 (the vacuum generated by the blower arrangement 160). Note that the effective area a1 of the control body 940 is larger than the effective area of the main valve closure body 950. This, for the same pressure difference, when P1=P3, the force F1 will be larger compared to force F2.

In Figure 11B, the control chamber valve 920 is opened to increase pressure P1 inside the control chamber 930, e.g., to atmospheric pressure P1=P2. The force F1 therefore decreases such that the combination of F1 with F3 no longer overcomes the force F2. The main valve closure body 950 therefore abruptly leaves the sealing position, whereby air forcefully enters the pre-separator upstream from the air filter 125. This generates a pulse of air 1100 which pushes particles away from the exterior filter wall, thereby cleaning the air filter 125.

In Figure 11C, the pressure P3 has been increased such that F2 is reduced. The combination of F1 and F3 now overcomes F2 to once more place the main valve closure body 950 in sealing position. This process can be repeated until the air filter 125 is not particle laden anymore.

## Claims

1. A dust container holder (180) having a protective shroud (1610) arranged to at least partly cover a dust container (810) received in a groove portion (620) of the dust container holder (180), **characterized in that** the protective shroud (1610) is formed in a resilient material allowing the protective shroud to be folded over the dust container (810) when received in the groove portion (620).

2. The dust container holder (180) according to claim 1, wherein the protective shroud (1610) is formed in rubber or a pliable plastic material.

3. The dust container holder (180) according to any of claims 1 or 2, wherein the protective shroud (1610) is formed in a disposable material.

4. The dust container holder (180) according to any of the preceding claims, wherein the protective shroud (1610) is arranged to envelope a pre-separator (120) of a dust extractor (100) at an end opposite to a dust extractor lid (101), and to be elastically held in position relative to the pre-separator (120).

5. The dust container holder (180) according to any of the preceding claims wherein the protective shroud (1610) is configured with an annular shape, and having a U-shaped cross-section (1700).

## Patentansprüche

1. Staubbehälterhalter (180), der eine Schutzabdeckung (1610), die angeordnet ist, um einen in einem Nutabschnitt (620) des Staubbehälterhalters (180) aufgenommenen Staubbehälter (810) mindestens teilweise zu bedecken, aufweist, **dadurch gekennzeichnet, dass** die Schutzabdeckung (1610) aus einem nachgiebigen Material ausgebildet ist, das es der Schutzabdeckung ermöglicht, über den Staubbehälter (810) gefaltet zu werden, wenn er in dem Nutabschnitt (620) aufgenommen ist.

2. Staubbehälterhalter (180) nach Anspruch 1, wobei die Schutzabdeckung (1610) aus Gummi oder einem flexiblen Kunststoffmaterial ausgebildet ist.

3. Staubbehälterhalter (180) nach einem der Ansprüche 1 oder 2, wobei die Schutzabdeckung (1610) aus einem Einwegmaterial ausgebildet ist.

4. Staubbehälterhalter (180) nach einem der Ansprüche, wobei die Schutzabdeckung (1610) angeordnet ist, um einen Vorscheider (120) eines Staubabsaugers (100) an einem dem Staubabsaugerdeckel (101) gegenüberliegenden Ende zu umhüllen und um relativ zu dem Vorscheider (120) elastisch in Position gehalten zu werden.

5. Staubbehälterhalter (180) nach einem der vorstehenden Ansprüche, wobei die Schutzabdeckung (1610) mit einer ringförmigen Gestalt konfiguriert ist und einen U-förmigen Querschnitt (1700) aufweist.

## Revendications

1. Support de bac à poussière (180) ayant une enveloppe de protection (1610) conçue pour recouvrir au moins partiellement un bac à poussière (810) reçu dans une partie rainure (620) du support de bac à poussière (180),
**caractérisé en ce que** l'enveloppe de protection (1610) est formée dans un matériau résilient permettant à l'enveloppe de protection d'être repliée par-dessus le bac à poussière (810) lorsqu'il est reçu dans la partie rainure (620).

2. Support de bac à poussière (180) selon la revendication 1, dans lequel l'enveloppe de protection (1610) est formée en caoutchouc ou dans un matériau plastique pliable.

3. Support de bac à poussière (180) selon l'une quelconque des revendications 1 ou 2, dans lequel l'enveloppe de protection (1610) est formée dans un matériau jetable.

4. Support de bac à poussière (180) selon l'une quelconque des revendications précédentes, dans lequel l'enveloppe de protection (1610) est agencée pour envelopper un pré-séparateur (120) d'un extracteur de poussière (100) au niveau d'une extrémité opposée au couvercle d'extracteur de poussière (101), et pour être maintenue élastiquement en position par rapport au pré-séparateur (120).

5. Support de bac à poussière (180) selon l'une quelconque des revendications précédentes, dans lequel l'enveloppe de protection (1610) est conçue avec une forme annulaire, et ayant une section transversale en forme de U (1700).
